# EUROPEAN PATENT SPECIFICATION

(11) **EP 3 939 223 B1**
(45) Date of publication and mention of the grant of the patent: **29.04.2026**
(21) Application number: 19715605.2
(22) Date of filing: 13.03.2019
(51) Int. Cl.: H04W 12/00, H04W 48/04, H04L 9/40, H04W 4/021, H04W 4/40, H04W 12/03, H04W 12/63

(54) **SYSTEM AND METHOD FOR OPERATING STEALTH MODE OF EMERGENCY VEHICLE**
VERFAHREN UND SYSTEM ZUR STEALTH-MODUSBETRIEB EINES EINSATZFAHRZEUG
MÉTHODE ET SYSTÈME POUR L'OPERATION D'UN VÉHICULE D'URGENCE EN MODE CAMOUFLAGE

(43) Date of publication of application: 19.01.2022
(73) Proprietor: Whelen Engineering Company, Inc., Chester, CT 06412 (US)
(72) Inventor: WHELEN, George W., Old Saybrook, CT 06475 (US)
(74) Representative: Prinz & Partner mbB
(86) International application number: PCT/US2019/021992
(87) International publication number: WO 2020/185220

(56) References cited:
- US-A1- 2012 009 897
- US-A1- 2018 025 553
- US-B1- 8 195 198

## Description

### TECHNICAL FIELD

This application relates to a system or method for effectively operating a stealth mode of an emergency vehicle.

### BACKGROUND

When emergency situations such as occurrences of crimes, disasters, car accidents, etc. take place, emergency vehicles will communicate with a control headquarter or another emergency vehicles to share information necessary for their own missions such as following or chasing suspects or cars driven by suspects, rescuing of victims, etc. However, the information being shared among related entities may include sensitive information on a certain emergency vehicle, so in case of the information is eavesdropped or hijacked by criminals, the whole mission can be in jeopardy.

US 2012/009897 A1 discusses a stealth mode for an emergency vehicle, and generic US 2018/025553 A1 refers to privacy settings in a vehicle with a stealth mode that is e.g. initiated due to a connection to an unknown network or a detected geofence. US 8 195 198 B1 refers to a privacy setting.

Thus, there is a need for a system controlling emergency vehicles to be operated in a stealth mode, if necessary, where data is suspended from being transmitted.

### SUMMARY OF THE INVENTION

Aspects of the present disclosure are a system with the features of claim 1, a method with the features of claim 13 and a storage medium with the features of claim 19 for operating a stealth mode of an emergency vehicle (EV).

In one aspect, there is provided a system for operating a stealth mode of an emergency vehicle (EV). The system includes comprising a controller configured to: receive input data including at least one of an input from an operator or one or more program input parameters; determine a data operation mode based on the received input data; and generate a control signal based on the determined operation mode. The data operation mode can be one of a normal mode and one or more stealth modes. When the data operation mode is one of the one or more stealth modes, the control signal is adapted to control a first device to suspend a transmission of at least one data among candidate suspended data to at least one second device in communication with the first device.

In one embodiment, the first device may be an emergency subscriber vehicle associated with the EV. The first device includes the controller. The second device may be any type of devices remotely located from the EV. For example, the second device may include a remote server at a control headquarter, and a subscriber device associated with another vehicle traveling nearby the EV.

In one embodiment, the first device may be the remote server at the control headquarter. The first device may include the controller. The second device may be any type of devices remotely located from the remote server. For example, the second device may include an emergency subscriber device associated with the EV and a subscriber device associated with another vehicle traveling nearby the EV.

In one embodiment, the one or more stealth modes may include a first stealth mode and a second stealth mode, and the candidate suspended data include first data and second data. When the data operation mode is the first stealth mode, the control signal may be adapted to control the first device to suspend the first data from being transmitted and transmit the second data.

Further, when the data operation mode is the second stealth mode, the control signal may be adapted to control the first device to suspend the second data from being transmitted and transmit the first data.

In one embodiment, the one or more stealth modes may include a first stealth mode having a first security level and a second stealth mode having a second security level higher than the first security level.

In one embodiment, the control signal may be adapted to control the first device to suspend both the first data and the second data from being transmitted when the data operation mode is the first stealth mode. The control signal may be adapted to control the first device suspend the second data from being transmitted and transmit the first data when the data operation mode is the second stealth mode.

In one embodiment, the first data may correspond to the first security level, and the second data may correspond to the second security level.

In one embodiment, when the data operation mode is one of the one or more stealth modes, the control signal may be adapted to control the first device to suspend all data of the candidate suspended data from being transmitted.

In one embodiment, the control signal may be generated by a processor of the controller, and the processor coupled to memory storing program instructions may be configured to, based on the program instructions: determine the one or more program input parameters associated with the vehicle; determine the data operation mode based on the one or more program input parameters; and generate the control signal pertaining to the determined data operation mode.

The one or more program input parameters include at least one of a current location of the EV, a velocity of the EV, identification of the EV, and a current time.

In one embodiment, the candidate suspended data may include EV-related data or data generated by an operator of the EV. The EV-related data may include a location of the vehicle, a velocity of the vehicle, and an ID of the vehicle. Further, the data generated by the operator of the EV may include a conversation message of the operator with another individual at a remote site, and the conversation message may include information of an occurrence of an event and details associated with the event.

In still another aspect of the present disclosure, there is provided a method for operating a stealth mode of an emergency vehicle. The method includes receiving input data including at least one of an input from an operator or one or more program input parameters; determining a data operation mode based on the received input data. The data operation mode is one of a normal mode and one or more stealth modes. The method further includes generating a control signal based on the determined operation mode. When the data operation mode is one of the one or more stealth modes, the control signal is adapted to control a first device to suspend a transmission of at least one data group among candidate suspended data to at least one second device in communication with the first device.

In still yet another aspect of the present disclosure, there is provided a computer-readable storage medium having computer readable program instructions. The computer readable program instructions read and executed by at least one processor for performing a method for operating a stealth mode of an emergency vehicle. The method includes receiving input data including at least one of an input from an operator or one or more program input parameters; determining a data operation mode based on the received input data. The data operation mode is one of a normal mode and one or more stealth modes. The method further includes generating a control signal based on the determined operation mode. When the data operation mode is one of the one or more stealth modes, the control signal is adapted to control a first device to suspend a transmission of at least one data group among candidate suspended data to at least one second device in communication with the first device.

### BRIEF DESCRIPTION OF THE DRAWINGS

The present disclosure will become more readily apparent from the specific description accompanied by the drawings.
FIG. 1 depicts an example environment where an EV communicates with another entities according to an embodiment of the present disclosure;
FIGS. 2A to 2C depict example mapping relationships among stealth modes, suspended data, and/or security levels according to an embodiment of the present disclosure;
FIG. 3A is a block diagram illustrating an example emergency subscriber device according to an embodiment of the present disclosure;
FIG. 3B is a block diagram illustrating an example remote server according to an embodiment of the present disclosure;
FIG. 4 depicts an example selection menu of an input device according to an embodiment of the present disclosure;
FIG. 5A depicts an example flow chart as to how the operation mode of an EV is controlled according to program instructions when the control signal is generated by the EV according to an embodiment of the present disclosure;
FIG. 5B depicts an example flow chart as to how the operation mode of an EV is controlled according to program instructions when the control signal is generated by a remote server according to an embodiment of the present disclosure; and
FIG. 6 is a block diagram of a computing system according to an embodiment of the present disclosure.

### DETAILED DESCRIPTION

The present disclosure may be understood more readily by reference to the following detailed description of the disclosure taken in connection with the accompanying drawing figures, which form a part of this disclosure. It is to be understood that this disclosure is not limited to the specific devices, methods, conditions or parameters described and/or shown herein, and that the terminology used herein is for the purpose of describing particular embodiments by way of example only and is not intended to be limiting of the claimed disclosure.

Also, as used in the specification and including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value.

The phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

The term "emergency vehicle (EV)" includes, but are not limited: a police vehicle, an ambulance, a fire truck, etc.

The term "stealth mode" refers to a mode where an EV or a remote server at a control headquarter in communication with the EV suspends at least one data from being transmitted to another device (e.g., another remotely located from the EV or the remote server).

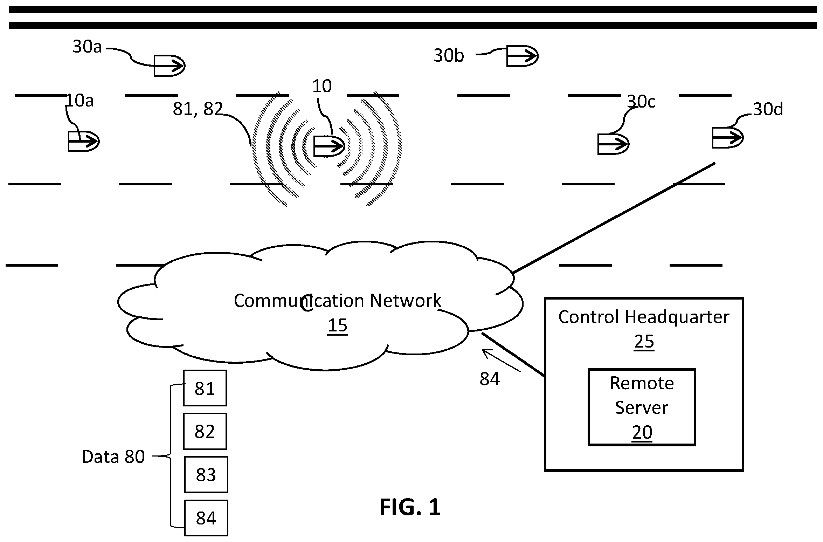

FIG. 1 depicts an example environment where an EV 10 communicates with another entities such as another EV 10a, other vehicles 30a to 30d, and a control headquarter 25 according to an embodiment of the present disclosure.

When emergency situations such as occurrences of crimes, disasters, and car accidents, an EV 10 at interest, a peer EV 10a, a control headquarter 25 and/or other vehicles 30a to 30d (e.g. vehicles which are not EVs) may exchange various data 80 over a road through a communication network 15 or a direct wireless channel, as depicted in FIG. 1.

The Data 80 being exchanged among the above-mentioned entities may include sensitive information that should not be shared with unauthorized individuals such as surveillances, criminals, police personnel not involved in the mission of the EV 10 or operators of the EV 10, etc.

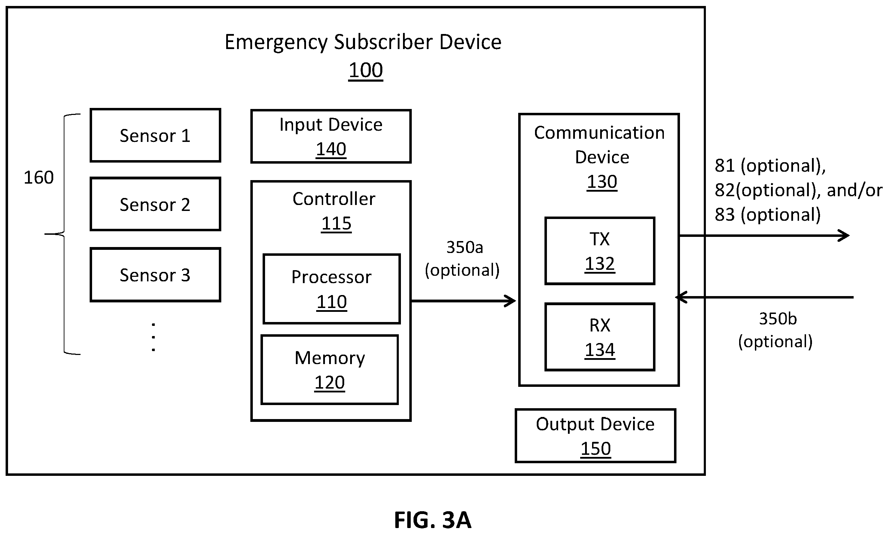

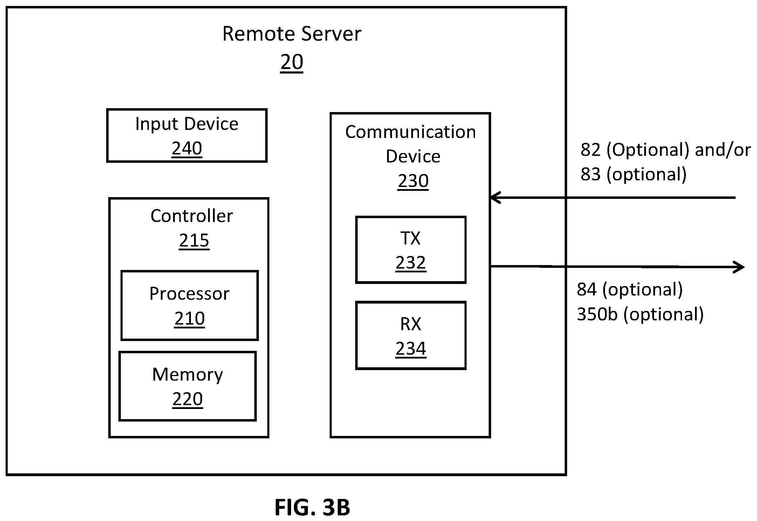

For example, in order to ensure the EV 10' s safety during traveling over the road, a geo fence (e.g., 81 of FIG. 3 A or 84 of FIG. 3B) can be generated by the control headquarter 25 or the EV 10. The geofence refers to a safety zone of the EV 10 which allows the EV to traverse the traffic safely. Example embodiments regarding generating and transmitting of the geofence of an emergency vehicle are disclosed in Applicant's copending U.S. Patent Application No. 16/243,692 filed on January 9, 2019, entitled "SYSTEM AND METHOD FOR VELOCITY- BASED GEOFENCING FOR EMERGENCY VEHICLE. As disclosed in U.S. Patent Application No. 16/243,692, a remote server 20 of the control headquarter 25 may generate a geofence based on an emergency indication signal (e.g., see 83 of FIG. 3A) which is transmitted from the EV 10. The emergency indication signal can include EV-related data 82 such as a location of the vehicle, a velocity of the vehicle, and an ID of the EV 10. Thus, in this case, the Data 80 being exchanged can be the EV-related data 81 transmitted from the EV 10 to the control headquarter 25 and/or the geofence 84 transmitted from the control headquarter 25 to other vehicles 30a to 30d.

In another scenario where the geofence is generated and transmitted by the EV 10, the EV 10 generates a geofence 81 based on the EV-related data 82. In this case, the Data 80 being exchanged can be the geofence 81 and/or the EV-related data 82 transmitted from the EV 10 to other vehicles.

In still another scenario where the EV 10 is a police car traveling to an emergency scene (e.g., crime scene), chasing or following suspects or cars driven by suspects (e.g., the EV 10 is an undercover police car), the Data 80 may include messages 83 exchanged among the EV 10, the EV 10a and/or the control headquarter 25. More particularly, the messages 83 exchanged among the EV 10, the EV 10a and/or the control headquarter 25 can include, but are not limited: an ID, a location, a velocity, a moving direction, etc. of a suspect or suspect vehicle which can help them to conduct their missions such as chasing or arresting the suspects or the suspect vehicle. Some of such Data 80 can be so sensitive, so in case of the information is eavesdropped or hijacked by criminals, the whole mission can be in jeopardy.

Thus, in some cases, upon receiving or detecting a control signal 350, the EV 10 is controlled to be in a stealth mode where at least a portion of the Data 80 is suspended from being transmitted, based on the control signal 350. The control signal 350 can be generated by an emergency subscriber device (see e.g., 100 FIG. 3A) of the EV 10 or the remote server 20 of the control headquarter 25.

In one embodiment, the stealth mode can be one selected from among one or more stealth modes. If the EV 10 is not in a stealth mode, the EV 10 is in a normal mode where none of the Data 80 is suspended from being transmitted. Hereinafter, the data subject to be suspended from being transmitted are referred to as "suspended data" for the sake of description.

In case of two or more stealth modes are set, the suspended data pertaining to the stealth modes can be different one from another, partially or exclusively.

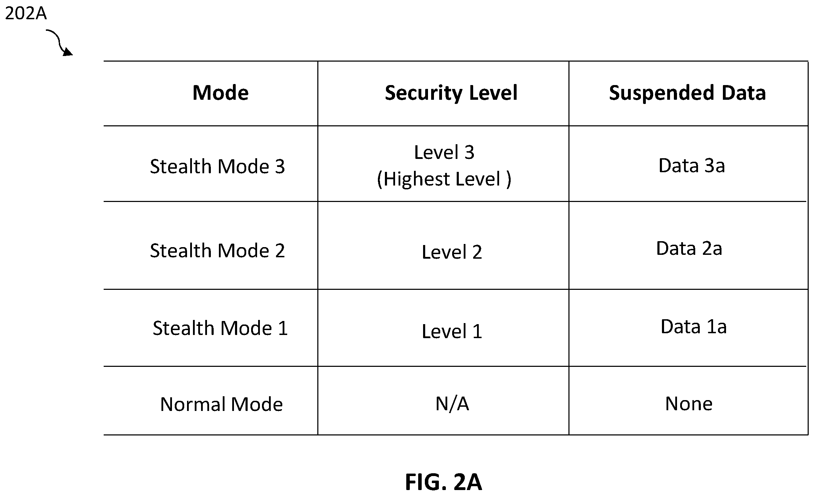

For example, a certain security level is assigned to each of the suspended data based on how sensitive or important the data is. In addition, if the number of security levels is more than one, different security levels are assigned to each of the stealth modes. Information of the security levels assigned to each suspended data may be stored in memory (e.g., 202A of FIG. 2A).

FIGS. 2A to 2C depict example mapping relationships 202A to 202C among stealth modes, suspended data, and/or security levels according to an embodiment of the present disclosure.

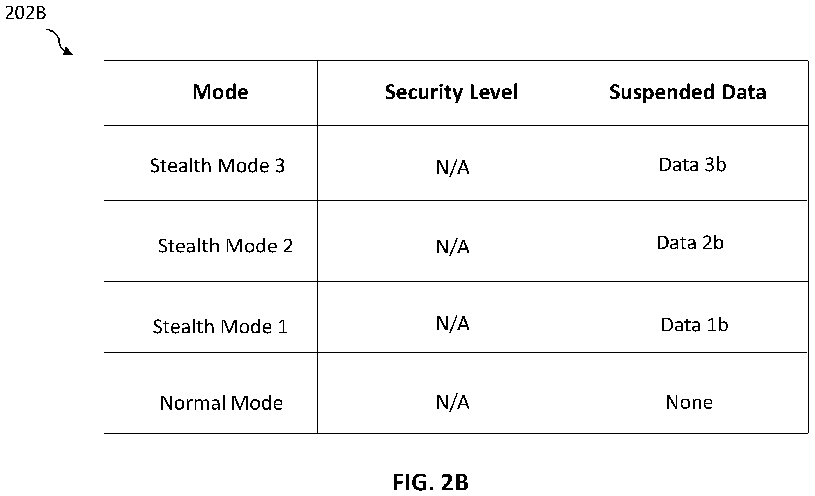

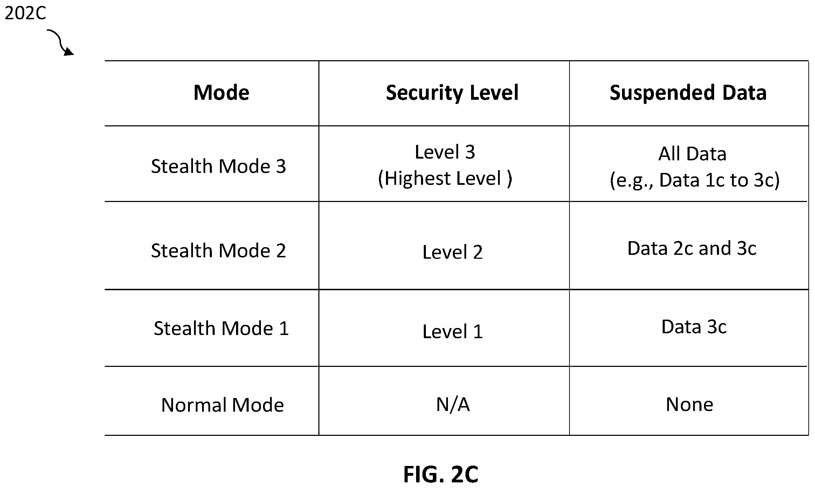

Referring to FIGS. 2A to 2C, it is assumed that three stealth modes are set for the sake of simplicity. However, embodiments of the present disclosure are not limited thereto. For example, the number of stealth modes can be one, two, or more than three. Data 1a to 3a of FIG. 2A, Data 1b to 3b of FIG. 2B, and Data 1c to 3c of FIG. 2C are part of the Data 80.

By way of example only, referring particularly to FIG. 2A, the stealth mode 3 is associated with the security level 3 (e.g., highest security level), and when the stealth mode 3 is determined based on the control signal 350, Data 3a is suspended from being transmitted. The stealth mode 2 is associated with the security level 2, and when the stealth mode 2 is determined based on the control signal 350, Data 2a is suspended from being transmitted. The stealth mode 1 is associated with the security level 1, and when the stealth mode 1 is determined based on the control signal 350, Data 1a is suspended from being transmitted. Here, Data 1a to 3a are assigned with the different security levels 1 to 3, respectively, and are exclusively different one from another. Further, in a normal mode, no security level is assigned and no suspended data is assigned thereto; for example, none of the Data 80 is suspended from being transmitted.

Referring now to FIG. 2B, no the security level is assigned to each stealth mode and suspended data. Data 1b to 3b are exclusively different one from another.

Referring now to FIG. 2C, the stealth mode 3 is associated with the security level 3 (e.g., highest security level), and when the stealth mode 3 is determined based on the control signal 350, all Data (e.g., Data 1c to 3c) are suspended from being transmitted; for example, none of the Data 80 can be transmitted. The stealth mode 2 is associated with the security level 2, and when the stealth mode 2 is determined based on the control signal 350, Data 1c and 2c are suspended from being transmitted. The stealth mode 1 is associated with the security level 1, and when the stealth mode 1 is determined based on the control signal 350, Data 1c is suspended from being transmitted. Here, as Data 3c has the highest security level, Data 3c remains to be suspended from being transmitted at all kinds of stealth modes 1 to 3. Further, Data 2c, which has a lower security level than Data 3c, but higher security level than Data 1c, is suspended from being transmitted at stealth modes 2 and 3 and can be transmitted in stealth mode 1. Data 1c, which has the lowest security level, is suspended from being transmitted at stealth mode 3 and can be transmitted in stealth modes 1 and 2. In this embodiment with reference to FIG. 2C, the suspended data pertaining to the stealth modes can be partially different one from another while Data 2c is commonly suspended from being transmitted in stealth modes 2 and 3 and Data 3c is commonly suspended from being transmitted in all stealth modes 1 to 3.

FIG. 3A is a block diagram illustrating an example emergency subscriber device 100 according to an embodiment of the present disclosure. FIG. 3B is a block diagram illustrating an example remote server 20 according to an embodiment of the present disclosure.

In one embodiment, the emergency subscriber device 100 can be installed as a part of the EV 10, or a wearable or portable device attached to the EV 10. The emergency subscriber device 100 is configured to generate/process/transmit a portion of the Data 80.

Referring particularly to FIG. 3A, the emergency subscriber device 100 includes a controller 115, an input device 140, an output device 150, a communication device 130 and one or more sensor devices 160. The controller 115 may include at least one processor 110 and a memory 120 coupled to the processor 110.

In one embodiment, when the EV 10 is in an emergency state where it heads to an emergency scene, the emergency subscriber device 100 may collect the EV-related data 82 using the sensor devices 160, determine a geofence 81 based on the collected EV-related data 82 using the controller 115, and transmit the geofence 81 to other vehicles 30a to 30d using the communication device 130. In another embodiment, the emergency subscriber device 100 may trigger an emergency state and transmit an emergency indication signal 83 to the remote server 20 using the transmitter 132. The emergency indication signal 83 indicates that the EV 10 is in an emergency state, and upon receiving the emergency indication signal 83, the remote server 20 may generate and transmit a geofence 84 to other vehicles 30a to 30d for providing an alert of the EV 10. In this case, the emergency indication signal 83 may include an ID of the EV, and optionally, various EV-related data such as a type of the EV, a location of the EV, a velocity of the EV, or the like.

The communication device 130 may include a transmitter 132 and a receiver 134. For example, the sensor data such as the location and the velocity can be collected using sensor devices 160 including, but are not limited to: an accelerometer, a global positioning system (GPS) receiver, a velocity sensor, a motion sensor, infrared light sensors, radar, laser radar, cameras, a gyroscope, or the like. The collected EV-related data 82 may include an ID of the EV, a type of the EV, a location of the EV, a velocity of the EV, or the like and may be stored in the memory 120 or other storage (not shown). For example, the transmission or suspension of data may be controlled by controlling activation or deactivation of the transmitter 132 based on the control signal 350.

The input device 140 can be, but is not limited to: a keyboard, a touch screen, an audio input system, a voice recognition system, or the like. The output device 150 can be, but is not limited to: a display, a screen, a speaker, a light, a siren, a visual system, an audio system, or the like.

In addition, the memory 120 includes program instructions executable by the processor 110 to perform functions or operations of the emergency subscriber device 100 described in the present disclosure. The processor 110 reads the stored data which have been collected from the sensor devices 160 and processes to generate the geofence 81 that will be transmitted to other vehicles 30a to 30d through the transmitter 132 of the communication device 130. In one embodiment, the receiver 134 of the communication device 130 can be used to receive a control or confirmation signal from the remote server 20.

The communication network 15 may be implemented using on a wireless communication technique based on radio-frequency identification (RFID), code division multiple access (CDMA), global system for mobile communication (GSM), wideband CDMA, CDMA-2000, time division multiple access (TDMA), long term evolution (LTE), wireless LAN, Bluetooth, or the like. The communication device 130 may be implemented to support at least one of the above-mentioned communication techniques.

Referring further to FIG. 2B, the remote server 20 includes a controller 215 which may include a processor 210 and a memory 220 coupled to the processor 210, a communication device 230, and input device 240. The remote server 20 may reside on a network infrastructure or on a third-party service provider, such as a cloud storage and computing system.

The communication device 230 includes a transmitter 232 and a receiver 234. The communication device 230 may be implemented to support at least one of the above-mentioned communication techniques such as RFID, CDMA, GSM, wideband CDMA, CDMA-2000, TDMA, LTE, wireless LAN, Bluetooth, or the like. The input device 240 can be, but is not limited to: a keyboard, a touch screen, an audio input system, a voice recognition system, or the like.

The suspension of the Data 80 from being transmitted is controlled using the control signal 350 (e.g., 350a of FIG. 3A and 350b of FIG. 3B) which can be provided by the emergency subscriber device 100 or the remote server 20.

### EXAMPLE OF CONTROL SIGNAL BEING PROVIDED BY EMERGENCY SUBSCRIBER DEVICE

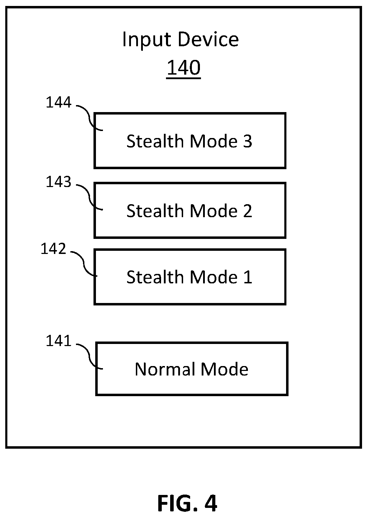

In one embodiment, the control signal 350a can be provided by the controller 115 of the emergency subscriber device 100 based on a user (e.g., operator of the EV 10) input through the input device 140. By way of example only, a selection menu for either a normal mode and at least one stealth mode may be implemented in the input device 140, as exemplary depicted in FIG. 4.

In the example selection menu shown in FIG. 4 where a normal mode 141 and three stealth modes 142 to 144 are provided, it will be apparent that the number of stealth modes implemented in the input device 140 can be one, two, or more than three. For example, the selection menu may include a specific button, or the like which allows the user to selectively suspend specific data (e.g., geofence, location, velocity, or ID of the EV 10).

In another embodiment, the control signal 350a is provided by the controller 115 of the emergency subscriber device 100 based on program instructions stored in the memory 120. For example, the controller 115 receives one or more program input parameters through the input device 140 or the sensor device 160 and determines one of the normal mode and the at least one stealth mode in which the EV 10 shall be operated, based on the program instructions and/or the one or more program input parameters. In this case, the one or more program input parameters may include, but are not limited: a current location, a velocity, ID, etc. of the EV 10, a current time, or the like.

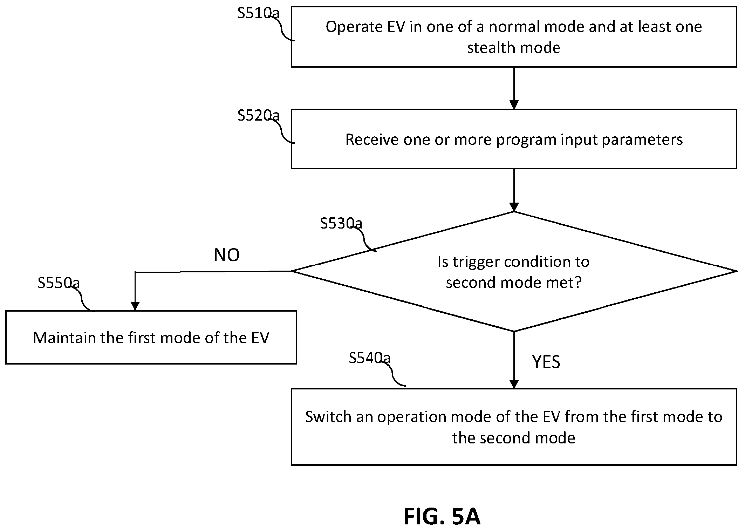

FIG. 5A depicts an example flow chart explaining as to how the operation mode of the EV 10 is controlled according to program instructions when the control signal is generated by the EV according to an embodiment of the present disclosure.

Referring to FIG. 5A, in step S510a, the EV 10 may be operated in one (e.g., referred to as a "first mode") of the normal mode and the at least one stealth mode.

In addition, the controller 115 of the emergency subscriber device 100 may receive one or more program input parameters from the sensor device 160, the remote server 20, or another storage mediums (S520a) and determines if a trigger condition for the first mode to be switched to another mode (e.g., referred to as a "second mode") of the normal mode and the at least one stealth mode (S530a). It is noted that the terms "first mode" and "second mode" are only used in the specification of the present application for the sake of description, but are not necessarily applied to the claims in a same manner.

If the controller 115 determines based on the received program input parameters and/or the program instructions that the trigger condition is met (YES), the controller 115 may generate a control signal 350a to switch the operation mode of the EV 10 (more particularly, e.g., emergency subscriber device 100) from the first mode to the second mode (S540a). For example, if it is assumed in S510a that the EV 10 is operated in the normal mode, the operation mode of the EV 10 will be switched to one of the at least one stealth mode. As a further example, if it is assumed in S510a that the EV 10 is operated in one of the at least one stealth mode, the operation mode of the EV 10 will be switched to the normal mode or another of the at least one stealth mode.

If the controller 115 determines based on the received program input parameters and/or the program instructions that the trigger condition is not met (NO), the controller 115 might not generate the control signal 350a to maintain the current operation mode (e.g., the first mode) of the EV 10 (more particularly, e.g., emergency subscriber device 100).

### EXAMPLE OF CONTROL SIGNAL BEING PROVIDED BY REMOTE SERVER

In one embodiment, the control signal 350b can be provided by the controller 215 of the remote server 20 based on a user (e.g., operator of the remote server 20 at the headquarter 25) input through the input device 240. A selection menu for either a normal mode and at least one stealth mode may be implemented in the input device 240. The selection menu of the input device 240 has a similar feature to the selection menu of the input device 140. Thus, duplicate description thereof will be omitted for the sake of simplicity.

In another embodiment, the control signal 350b can be provided by the controller 215 of the remote server 20 based on program instructions stored in the memory 220. For example, the controller 215 may receive one or more program input parameters from the emergency subscriber device 100 and determine one of the normal mode and the at least one stealth mode in which the EV 10 is operated based on the program instructions and/or the one or more program input parameters. In this case, the one or more program input parameters may include a current location, a velocity, ID, etc. of the EV 10 and a current time.

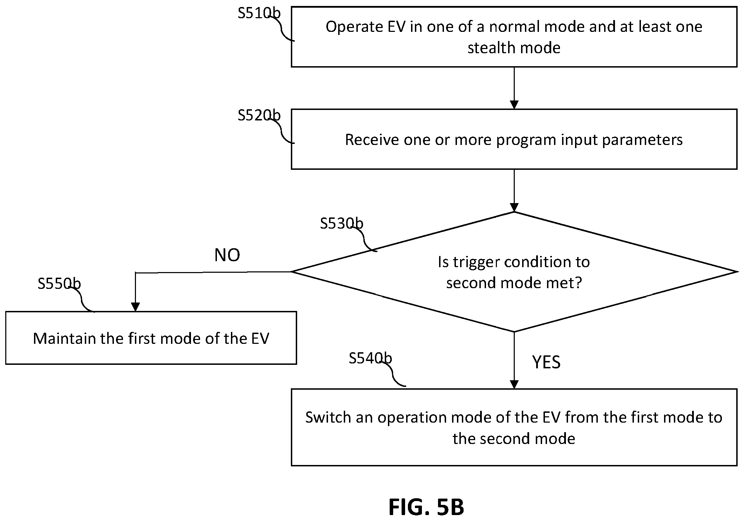

FIG. 5B depicts an example flow chart explaining as to how the operation mode of an EV is controlled according to program instructions when the control signal is generated by the remote server 20 according to an embodiment of the present disclosure.

Referring to FIG. 5B, in step S510b the EV 10 may be operated in one (e.g., referred to as a "first mode") of the normal mode and the at least one stealth mode.

In addition, the controller 215 of the remote server 20 may receive one or more program input parameters from the emergency subscriber device 100 (S520b) and may determine if a trigger condition for the first mode to be switched to another mode (e.g., referred to as a "second mode") of the normal mode and the at least one stealth mode (S530b).

If the controller 215 determines based on the received program input parameters and/or the program instructions that the trigger condition is met (YES), the controller 215 may generate a control signal 350b and transmit the control signal 350b to the emergency subscriber device 100 in order to switch the operation mode of the EV 10 (more particularly, e.g., emergency subscriber device 100) from the first mode to the second mode (S540b). For example, if it is assumed in S510b that the EV 10 is operated in the normal mode, the operation mode of the EV 10 will be switched to one of the at least one stealth mode. As a further example, if it is assumed in S510b that the EV 10 is operated in one of the at least one stealth mode, the operation mode of the EV 10 will be switched to the normal mode or another of the at least one stealth mode.

If the controller 215 determines based on the received program input parameters and/or the program instructions that the trigger condition is not met (NO), the controller 215 might not generate the control signal 350b, so that the current operation mode (e.g., the first mode) of the EV 10 can be maintained.

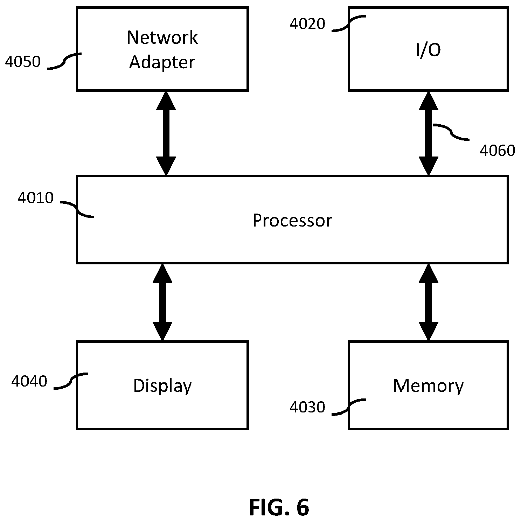

FIG. 6 is a block diagram of a computing system 4000 according to an exemplary embodiment of the present disclosure.

Referring to FIG. 6, the computing system 4000 may be used as a platform for performing: the functions or operations described hereinabove with respect to at least one of the emergency subscriber device 100 and the remote server 20; and the methods described with reference to FIGS. 5 A and 5B.

Referring to FIG. 6, the computing system 4000 may include a processor 4010, I/O devices 4020, a memory system 4030, a display device 4040, and/or a network adaptor 4050.

The processor 4010 may drive the I/O devices 4020, the memory system 4030, the display device 4040, and/or the network adaptor 4050 through a bus 4060.

The computing system 4000 may include a program module for performing: the functions or operations described hereinabove with respect to at least one of the emergency subscriber device 100 and the remote server 20; and the methods described with reference to FIGS. 5 A and 5B. For example, the program module may include routines, programs, objects, components, logic, data structures, or the like, for performing particular tasks or implement particular abstract data types. The processor (e.g., 4010) of the computing system 4000 may execute instructions written in the program module to perform: the functions or operations described hereinabove with respect to at least one of the emergency subscriber device 100 and the remote server 20; and the methods described with reference to FIGS. 5 A and 5B. The program module may be programmed into the integrated circuits of the processor (e.g., 4010). In an exemplary embodiment, the program module may be stored in the memory system (e.g., 4030) or in a remote computer system storage media.

The computing system 4000 may include a variety of computing system readable media. Such media may be any available media that is accessible by the computer system (e.g., 4000), and it may include both volatile and non-volatile media, removable and non-removable media.

The memory system (e.g., 4030) can include computer system readable media in the form of volatile memory, such as RAM and/or cache memory or others. The computer system (e.g., 4000) may further include other removable/non-removable, volatile/non-volatile computer system storage media.

The computer system (e.g., 4000) may communicate with one or more devices using the network adapter (e.g., 4050). The network adapter may support wired communications based on Internet, local area network (LAN), wide area network (WAN), or the like, or wireless communications based on code division multiple access (CDMA), global system for mobile communication (GSM), wideband CDMA, CDMA-2000, time division multiple access
(TDMA), long term evolution (LTE), wireless LAN, Bluetooth, Zig Bee, or the like.

Exemplary embodiments of the present disclosure may include a system, a method, and/or a non-transitory computer readable storage medium. The non-transitory computer readable storage medium (e.g., the memory system 4030) has computer readable program instructions thereon for causing a processor to carry out aspects of the present disclosure.

The computer readable storage medium can be a tangible device that can retain and store instructions for use by an instruction execution device. The computer readable storage medium may be, for example, but not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EEPROM or Flash memory), a static random access memory (SRAM), a portable compact disc read-only memory (CD-ROM), a digital versatile disk (DVD), a memory stick, a floppy disk, or the like, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to the computing system 4000 from the computer readable storage medium or to an external computer or external storage device via a network. The network may include copper transmission cables, optical transmission fibers, wireless transmission, routers, firewalls, switches, gateway computers and/or edge servers. A network adapter card (e.g., 4050) or network interface in each computing/processing device receives computer readable program instructions from the network and forwards the computer readable program instructions for storage in a computer readable storage medium within the computing system.

Computer readable program instructions for carrying out operations of the present disclosure may be assembler instructions, instruction-set-architecture (ISA) instructions, machine instructions, machine dependent instructions, microcode, firmware instructions, state setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the computing system (e.g., 4000) through any type of network, including a LAN or a WAN, or the connection may be made to an external computer (for example, through the Internet using an Internet Service Provider). In an exemplary embodiment, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, system (or device), and computer program products (or computer readable medium). It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The corresponding structures, materials, acts, and equivalents of all means or step plus function elements, if any, in the claims below are intended to include any structure, material, or act for performing the function in combination with other claimed elements as specifically claimed. The description of the present disclosure has been presented for purposes of illustration and description but is not intended to be exhaustive or limited to the present disclosure in the form disclosed. The embodiment was chosen and described in order to best explain the principles of the present disclosure and the practical application, and to enable others of ordinary skill in the art to understand the present disclosure for various embodiments with various modifications as are suited to the particular use contemplated. It is therefore intended that the present invention not be limited to the exact forms and details described and illustrated but fall within the scope of the appended claims.

## Claims

1. A system for operating a stealth mode of an emergency vehicle (EV) (10), comprising:
a controller (115, 215) configured to:
receive data (82) including at least one of an input from an operator or one or more program input parameters;
wherein the data (82) comprises a location of the vehicle, a velocity of the vehicle, and an ID of the EV (10);
determine a data operation mode based on the received one or more program input parameters including the location of the vehicle and the velocity of the vehicle, wherein the data operation mode is one of a normal mode (141) and one or more stealth modes (142, 143, 144);
generate a control signal (350) by an emergency subscriber device (100) or a remote server (20) based on the determined operation mode,
when the data operation mode is one of the one or more stealth modes (142, 143, 144), the control signal (350) is adapted to control a first device to suspend a transmission of at least one data among candidate suspended data (80) over a communication network (15) or a direct wireless channel to at least one second device in communication with the first device; and
when the EV (10) is in an emergency state, the emergency subscriber device (100) collects the data (82) using one or more sensor devices (160), determines a geofence (81) based on the data (82) using the controller (115, 215), and transmits the geofence (81) to one or more other vehicles (30) using a communication device (130).

2. The system of claim 1, wherein the first device is associated with the EV (10) and includes the controller (115), and wherein the second device is remotely located from the EV (10).

3. The system of claim 1, wherein the first device is associated with the remote server (20) and includes the controller (115, 215), and
wherein the second device is remotely located from the remote server (20).

4. The system of claim 1, wherein the one or more stealth modes (142, 143,144) include a first stealth mode (142) and a second stealth mode (143), and the candidate suspended data include first data and second data, and
wherein the control signal (350) is adapted to control the first device:
when the data operation mode is the first stealth mode (142), suspend the first data from being transmitted and transmit the second data; and
when the data operation mode is the second stealth mode (143), suspend the second data from being transmitted and transmit the first data.

5. The system of claim 1, wherein the one or more stealth modes (142, 143, 144) includes a first stealth mode (142) having a first security level and a second stealth mode (143) having a second security level higher than the first security level, and the candidate suspended data include first data and second data.

6. The system of claim 5, wherein the control signal (350) is adapted to control the first device to:
suspend both the first data and the second data from being transmitted when the data operation mode is the first stealth mode (142); and
suspend the second data from being transmitted and transmit the first data when the data operation mode is the second stealth mode (143).

7. The system of claim 6, wherein the first data has a higher security level than the second data.

8. The system of claim 5, wherein when the data operation mode is one of the one or more stealth modes (142, 143, 144), the control signal (350) is adapted to control the first device to suspend all data (80) of the candidate suspended data from being transmitted.

9. The system of claim 1, wherein the control signal (350) is generated by a processor (110, 210) of the controller (115, 215) of the emergency subscriber device (100) or the remote server (20), the processor (110, 210) coupled to memory (120, 220) storing program instructions being configured to, based on the program instructions:
determine the one or more program input parameters associated with the EV (10);
determine the data operation mode based on the one or more program input parameters; and
generate the control signal (350) pertaining to the determined data operation mode.

10. The system of claim 1, wherein the one or more program input parameters comprise a current time.

11. The system of claim 1, wherein the candidate suspended data include EV-related data (82) or data generated by an operator of the EV (10).

12. The system of claim 11, wherein the data generated by the operator of the EV (10) comprise a conversation message of the operator with another individual at a remote site, and the conversation message comprises information of:
an occurrence of an event; and
details associated with the event.

13. A method for operating a stealth mode of an emergency vehicle (10), comprising:
receiving data (82) including at least one of an input from an operator or one or more program input parameters;
wherein the data (82) comprises a location of the vehicle, a velocity of the vehicle, and an ID of the EV (10);
determining a data operation mode based on the received one or more program input parameters including the location of the vehicle and the velocity of the vehicle, wherein the data operation mode is one of a normal mode (141) and one or more stealth modes (142, 143, 144);
generating a control signal (350) by an emergency subscriber device (100) or a remote server (20) based on the determined operation mode,
when the data operation mode is one of the one or more stealth modes (142, 143, 144), the control signal (350) is adapted to control a first device to suspend a transmission of at least one data group (80) among candidate suspended data over a communication network (15) or a direct wireless channel to at least one second device in communication with the first device; and
when the EV (10) is in an emergency state, the emergency subscriber device (100) collects the data (82) using one or more sensor devices (160), determines a geofence (81) based on the data (82) using the controller (115, 215), and transmits the geofence (81) to one or more other vehicles (30) using a communication device (130).

14. The method of claim 13, wherein the one or more stealth modes (142, 143,144) includes a first stealth mode (142) having a first security level and a second stealth mode (143) having a second security level higher than the first security level.

15. The method of claim 14, wherein the control signal (350) is adapted to control the first device to:
suspend both the first data and the second data from being transmitted when the data operation mode is the first stealth mode (142); and
suspend the second data from being transmitted and transmit the first data when the data operation mode is the second stealth mode (143).

16. The method of claim 15, wherein the first data has a higher security level than the second data.

17. The method of claim 13, further comprising:
when the first device is operated in one of the one or more stealth modes (142, 143, 144),
determining the operation mode be the normal mode (141), and
generating the control signal adapted to control the first device to release from the one of the one or more stealth modes (142, 143, 144).

18. The method of claim 13, further comprising:
when the first device operates in the normal mode (141),
determining the operation mode be one of the one or more stealth modes (142, 143, 144),
identifying third data as a portion of the at least one data based on the determined operation mode, and
generating the control signal (350) adapted to control the first device to suspend the third data from being transmitted.

19. A computer-readable storage medium (4030) having computer readable program instructions, the computer readable program instructions read and executed by at least one processor (4010) for performing a method for operating a stealth mode of an emergency vehicle (10), comprising:
receiving data (82) including at least one of an input from an operator or one or more program input parameters;
wherein the data (82) comprises a location of the vehicle, a velocity of the vehicle, and an ID of the EV (10);
determining a data operation mode based on the received one or more program input parameters including the location of the vehicle and the velocity of the vehicle, wherein the data operation mode is one of a normal mode (141) and one or more stealth modes (142, 143, 144);
generating a control signal (350) by an emergency subscriber device (100) or a remote server (20) based on the determined operation mode,
when the data operation mode is one of the one or more stealth modes (142, 143, 144), the control signal (350) is adapted to control a first device to suspend a transmission of at least one data group (80) among candidate suspended data over a communication network (15) or a direct wireless channel to at least one second device in communication with the first device; and
when the EV (10) is in an emergency state, the emergency subscriber device (100) collects the data (82) using one or more sensor devices (160), determines a geofence (81) based on the data (82) using the controller (115, 215), and transmits the geofence (81) to one or more other vehicles (30) using a communication device (130).

20. The storage medium (4030) of claim 19, wherein the one or more stealth modes (142, 143, 144) includes a first stealth mode (142) having a first security level and a second stealth mode (143) having a second security level higher than the first security level.

21. The storage medium (4030) of claim 20, wherein the control signal (350) is adapted to control the first device:
suspend both the first data and the second data from being transmitted when the data operation mode is the first stealth mode (142); and
suspend the second data from being transmitted and transmit the first data when the data operation mode is the second stealth mode (143).

22. The storage medium (4030) of claim 21, wherein the first data has a higher security level than the second data.

23. The storage medium (4030) of claim 19, further comprising:
when the first device is operated in one of the one or more stealth modes (142. 143. 144),
determining the operation mode be the normal mode (141), and
generating the control signal adapted to control the first device to release from the one of the one or more stealth modes (142, 143, 144).

24. The storage medium (4030) of claim 19, further comprising:
when the first device operates in the normal mode (141),
determining the operation mode be one of the one or more stealth modes (412, 413, 144),
identifying third data as a portion of the at least one data based on the determined operation mode, and
generating the control signal (350) adapted to control the first device to suspend the third data from being transmitted.

## Patentansprüche

1. System zum Betreiben eines Tarnkappenmodus eines Einsatzfahrzeugs (EF) (10), mit:
einer Steuereinheit (115, 215), die so eingerichtet ist, dass sie:
Daten (82) empfängt, zu denen ein Eingang von einer Bedienperson und/oder ein oder mehrere Programmeingangsparameter gehören,
wobei die Daten (82) einen Standort des Fahrzeugs, eine Geschwindigkeit des Fahrzeugs und eine Kennung des EFs (10) umfassen,
einen Datenoperationsmodus auf der Grundlage des empfangenen einen oder der empfangenen mehreren Programmeingangsparameter einschließlich des Standorts des Fahrzeugs und der Geschwindigkeit des Fahrzeugs bestimmt, wobei der Datenoperationsmodus ein Normalmodus (141) oder ein oder mehrere Tarnkappenmodi (142, 143, 144) ist,
auf der Grundlage des bestimmten Operationsmodus ein Steuersignal (350) durch eine Notfallteilnehmervorrichtung (100) oder einen Remote-Server (20) erzeugt,
dann, wenn der Datenoperationsmodus einer aus dem einen oder den mehreren Tarnkappenmodi (142, 143, 144) ist, das Steuersignal (350) so ausgebildet ist, dass es eine erste Vorrichtung so ansteuert, dass sie eine Übertragung wenigstens eines Datums unter in Frage kommenden ausgesetzten Daten (80) über ein Kommunikationsnetzwerk (15) oder einen direkten Funkkanal an wenigstens eine zweite Vorrichtung, die mit der ersten Vorrichtung in Verbindung steht, aussetzt, und
dann, wenn sich das EF (10) in einem Notfallzustand befindet, die Notfallteilnehmervorrichtung (100) die Daten (82) unter Verwendung einer oder mehrerer Sensorvorrichtungen (160) erfasst, mittels der Steuereinheit (115, 215) anhand der Daten (82) einen Geozaun (81) bestimmt und den Geozaun (81) mittels einer Kommunikationsvorrichtung (130) an ein oder mehrere andere Fahrzeuge (30) überträgt.

2. System nach Anspruch 1, bei dem die erste Vorrichtung dem EF (10) zugeordnet ist und die Steuereinheit (115) aufweist und bei dem sich die zweite Vorrichtung von dem EF (10) entfernt befindet.

3. System nach Anspruch 1, bei dem die erste Vorrichtung dem Remote-Server (20) zugeordnet ist und die Steuereinheit (115, 215) aufweist und
bei dem sich die zweite Vorrichtung von dem Remote-Server (20) entfernt befindet.

4. System nach Anspruch 1, bei dem zu dem einen oder den mehreren Tarnkappenmodi (142, 143, 144) ein erster Tarnkappenmodus (142) und ein zweiter Tarnkappenmodus (143) gehören und die in Frage kommenden ausgesetzten Daten erste Daten und zweite Daten umfassen, und
bei dem das Steuersignal (350) zur Steuerung der ersten Vorrichtung derart ausgebildet ist:
wenn der Datenoperationsmodus der erste Tarnkappenmodus (142) ist, die Übertragung der ersten Daten auszusetzen und die zweiten Daten zu übertragen, und
wenn der Datenoperationsmodus der zweite Tarnkappenmodus (143) ist, die Übertragung der zweiten Daten auszusetzen und die ersten Daten zu übertragen.

5. System nach Anspruch 1, bei dem der eine oder die mehreren Tarnkappenmodi (142, 143, 144) einen ersten Tarnkappenmodus (142) mit einer ersten Sicherheitsstufe und einen zweiten Tarnkappenmodus (143) mit einer zweiten Sicherheitsstufe umfassen, die höher als die erste Sicherheitsstufe ist, und die in Frage kommenden ausgesetzten Daten erste Daten und zweite Daten umfassen.

6. System nach Anspruch 5, bei dem das Steuersignal (350) dazu ausgebildet ist, die erste Vorrichtung so anzusteuern, dass sie:
die Übertragung sowohl der ersten Daten als auch der zweiten Daten aussetzt, wenn der Datenoperationsmodus der erste Tarnkappenmodus (142) ist, und
die Übertragung der zweiten Daten aussetzt und die ersten Daten überträgt, wenn der Datenoperationsmodus der zweite Tarnkappenmodus (143) ist.

7. System nach Anspruch 6, bei dem die ersten Daten eine höhere Sicherheitsstufe aufweisen als die zweiten Daten.

8. System nach Anspruch 5, wobei dann, wenn der Datenoperationsmodus einer aus dem einen oder den mehreren Tarnkappenmodi (142, 143, 144) ist, das Steuersignal (350) so ausgebildet ist, dass es die erste Vorrichtung so ansteuert, dass sie die Übertragung aller Daten (80) der in Frage kommenden ausgesetzten Daten aussetzt.

9. System nach Anspruch 1, bei dem das Steuersignal (350) von einem Prozessor (110, 210) der Steuereinheit (115, 215) der Notfallteilnehmervorrichtung (100) oder des Remote-Servers (20) erzeugt wird, wobei der Prozessor (110, 210), der mit einem Speicher (120, 220) gekoppelt ist, in dem Programmbefehle gespeichert sind, so eingerichtet ist, dass er auf der Grundlage der Programmbefehle:
den einen oder die mehreren Programmeingangsparameter ermittelt, die dem EF (10) zugeordnet sind,
den Datenoperationsmodus auf der Grundlage des einen oder der mehreren Programmeingangsparameter bestimmt und
das Steuersignal (350) erzeugt, das zu dem bestimmten Datenoperationsmodus gehört.

10. System nach Anspruch 1, bei dem der eine oder die mehreren Programmeingangsparameter eine aktuelle Zeit umfassen.

11. System nach Anspruch 1, bei dem die in Frage kommenden ausgesetzten Daten EF-bezogene Daten (82) oder von einem Führer des EFs (10) erzeugte Daten umfassen.

12. System nach Anspruch 11, bei dem die von dem Führer des EFs (10) erzeugten Daten eine Gesprächsnachricht des Führers mit einer anderen Person an einem entfernten Ort umfassen und die Gesprächsnachricht Informationen über Folgendes umfasst:
ein Eintritt eines Ereignisses und
Einzelheiten im Zusammenhang mit dem Ereignis.

13. Verfahren zum Betreiben eines Tarnkappenmodus eines Einsatzfahrzeugs (10), das Folgendes umfasst:
Empfangen von Daten (82), zu denen ein Eingang von einer Bedienperson und/oder ein oder mehrere Programmeingangsparameter gehören,
wobei die Daten (82) einen Standort des Fahrzeugs, eine Geschwindigkeit des Fahrzeugs und eine Kennung des EFs (10) umfassen,
Bestimmen eines Datenoperationsmodus auf der Grundlage des empfangenen einen oder der empfangenen mehreren Programmeingangsparameter einschließlich des Standorts des Fahrzeugs und der Geschwindigkeit des Fahrzeugs, wobei der Datenoperationsmodus ein Normalmodus (141) oder ein oder mehrere Tarnkappenmodi (142, 143, 144) ist,
Erzeugen eines Steuersignals (350) durch eine Notfallteilnehmervorrichtung (100) oder einen Remote-Server (20) auf der Grundlage des bestimmten Operationsmodus,
dann, wenn der Datenoperationsmodus einer aus dem einen oder den mehreren Tarnkappenmodi (142, 143, 144) ist, das Steuersignal (350) so ausgebildet ist, dass es eine erste Vorrichtung so ansteuert, dass sie eine Übertragung wenigstens einer Datengruppe (80) unter in Frage kommenden ausgesetzten Daten über ein Kommunikationsnetzwerk (15) oder einen direkten Funkkanal an wenigstens eine zweite Vorrichtung, die mit der ersten Vorrichtung in Verbindung steht, aussetzt, und
dann, wenn sich das EF (10) in einem Notfallzustand befindet, die Notfallteilnehmervorrichtung (100) die Daten (82) unter Verwendung einer oder mehrerer Sensorvorrichtungen (160) erfasst, mittels der Steuereinheit (115, 215) anhand der Daten (82) einen Geozaun (81) bestimmt und den Geozaun (81) mittels einer Kommunikationsvorrichtung (130) an ein oder mehrere andere Fahrzeuge (30) überträgt.

14. Verfahren nach Anspruch 13, bei dem der eine oder die mehreren Tarnkappenmodi (142, 143, 144) einen ersten Tarnkappenmodus (142) mit einer ersten Sicherheitsstufe und einen zweiten Tarnkappenmodus (143) mit einer zweiten Sicherheitsstufe umfassen, die höher als die erste Sicherheitsstufe ist.

15. Verfahren nach Anspruch 14, bei dem das Steuersignal (350) dazu ausgebildet ist, die erste Vorrichtung so anzusteuern, dass sie:
die Übertragung sowohl der ersten Daten als auch der zweiten Daten aussetzt, wenn der Datenoperationsmodus der erste Tarnkappenmodus (142) ist, und
die Übertragung der zweiten Daten aussetzt und die ersten Daten überträgt, wenn der Datenoperationsmodus der zweite Tarnkappenmodus (143) ist.

16. Verfahren nach Anspruch 15, bei dem die ersten Daten eine höhere Sicherheitsstufe aufweisen als die zweiten Daten.

17. Verfahren nach Anspruch 13, das ferner Folgendes umfasst:
dann, wenn die erste Vorrichtung in einem aus dem einen oder den mehreren Tarnkappenmodi (142, 143, 144) betrieben wird,
Bestimmen, dass der Operationsmodus der Normalmodus (141) ist, und
Erzeugen des Steuersignals, das dazu ausgebildet ist, die erste Vorrichtung so anzusteuern, dass sie sich von dem einen aus dem einen oder den mehreren Tarnkappenmodi (142, 143, 144) löst.

18. Verfahren nach Anspruch 13, das ferner Folgendes umfasst:
wenn die erste Vorrichtung im Normalmodus (141) arbeitet,
Bestimmen des Operationsmodus als einen aus dem einen oder den mehreren Tarnkappenmodi (142, 143, 144),
Ermitteln von dritten Daten als Teil der wenigstens einen Daten auf der Grundlage des bestimmten Operationsmodus und
Erzeugen des Steuersignals (350), das dazu ausgebildet ist, die erste Vorrichtung so anzusteuern, dass sie die Übertragung der dritten Daten aussetzt.

19. Computerlesbares Speichermedium (4030) mit computerlesbaren Programmbefehlen, wobei die computerlesbaren Programmbefehle von wenigstens einem Prozessor (4010) gelesen und ausgeführt werden, um ein Verfahren zum Betreiben eines Tarnkappenmodus eines Einsatzfahrzeugs (10) durchzuführen, das Folgendes umfasst:
Empfangen von Daten (82), zu denen ein Eingang von einer Bedienperson und/oder ein oder mehrere Programmeingangsparameter gehören,
wobei die Daten (82) einen Standort des Fahrzeugs, eine Geschwindigkeit des Fahrzeugs und eine Kennung des EFs (10) umfassen,
Bestimmen eines Datenoperationsmodus auf der Grundlage des empfangenen einen oder der empfangenen mehreren Programmeingangsparameter einschließlich des Standorts des Fahrzeugs und der Geschwindigkeit des Fahrzeugs, wobei der Datenoperationsmodus ein Normalmodus (141) oder ein oder mehrere Tarnkappenmodi (142, 143, 144) ist,
Erzeugen eines Steuersignals (350) durch eine Notfallteilnehmervorrichtung (100) oder einen Remote-Server (20) auf der Grundlage des bestimmten Operationsmodus,
dann, wenn der Datenoperationsmodus einer aus dem einen oder den mehreren Tarnkappenmodi (142, 143, 144) ist, das Steuersignal (350) so ausgebildet ist, dass es eine erste Vorrichtung so ansteuert, dass sie eine Übertragung wenigstens einer Datengruppe (80) unter in Frage kommenden ausgesetzten Daten über ein Kommunikationsnetzwerk (15) oder einen direkten Funkkanal an wenigstens eine zweite Vorrichtung, die mit der ersten Vorrichtung in Verbindung steht, aussetzt, und
dann, wenn sich das EF (10) in einem Notfallzustand befindet, die Notfallteilnehmervorrichtung (100) die Daten (82) unter Verwendung einer oder mehrerer Sensorvorrichtungen (160) erfasst, mittels der Steuereinheit (115, 215) anhand der Daten (82) einen Geozaun (81) bestimmt und den Geozaun (81) mittels einer Kommunikationsvorrichtung (130) an ein oder mehrere andere Fahrzeuge (30) überträgt.

20. Speichermedium (4030) nach Anspruch 19, bei dem der eine oder die mehreren Tarnkappenmodi (142, 143, 144) einen ersten Tarnkappenmodus (142) mit einer ersten Sicherheitsstufe und einen zweiten Tarnkappenmodus (143) mit einer zweiten Sicherheitsstufe umfassen, die höher als die erste Sicherheitsstufe ist.

21. Speichermedium (4030) nach Anspruch 20, bei dem das Steuersignal (350) dazu ausgebildet ist, die erste Vorrichtung anzusteuern:
die Übertragung sowohl der ersten Daten als auch der zweiten Daten auszusetzen, wenn der Datenoperationsmodus der erste Tarnkappenmodus (142) ist, und
die Übertragung der zweiten Daten auszusetzen und die ersten Daten zu übertragen, wenn der Datenoperationsmodus der zweite Tarnkappenmodus (143) ist.

22. Speichermedium (4030) nach Anspruch 21, bei dem die ersten Daten eine höhere Sicherheitsstufe aufweisen als die zweiten Daten.

23. Speichermedium (4030) nach Anspruch 19, das ferner Folgendes umfasst:
dann, wenn die erste Vorrichtung in einem aus dem einen oder den mehreren Tarnkappenmodi (142, 143, 144) betrieben wird,
Bestimmen, dass der Operationsmodus der Normalmodus (141) ist, und
Erzeugen des Steuersignals, das dazu ausgebildet ist, die erste Vorrichtung so anzusteuern, dass sie sich von dem einen aus dem einen oder den mehreren Tarnkappenmodi (142, 143, 144) löst.

24. Speichermedium (4030) nach Anspruch 19, das ferner Folgendes umfasst:
wenn die erste Vorrichtung im Normalmodus (141) arbeitet,
Bestimmen des Operationsmodus als einen aus dem einen oder den mehreren Tarnkappenmodi (412, 413, 144),
Ermitteln von dritten Daten als Teil der wenigstens einen Daten auf der Grundlage des bestimmten Operationsmodus und
Erzeugen des Steuersignals (350), das dazu ausgebildet ist, die erste Vorrichtung so anzusteuern, dass sie die Übertragung der dritten Daten aussetzt.

## Revendications

1. Système de mise en œuvre d'un mode furtif d'un véhicule d'urgence (VU) (10), comprenant :
une unité de commande (115, 215) réalisée de manière :
à recevoir des données (82) comprenant une entrée provenant d'un opérateur et/ou un ou plusieurs paramètres d'entrée de programme,
les données (82) comprenant une position du véhicule, une vitesse du véhicule et un identifiant du VU (10),
à déterminer un mode d'opération de données sur la base dudit un ou desdits plusieurs paramètres d'entrée de programme reçus, comprenant la position du véhicule et la vitesse du véhicule, le mode d'opération de données étant un mode normal (141) ou un ou plusieurs modes furtifs (142, 143, 144),
à générer un signal de commande (350) par un dispositif participant d'urgence (100) ou un serveur distant (20) sur la base du mode d'opération déterminé,
le signal de commande (350), lorsque le mode d'opération de données est l'un parmi ledit un ou lesdits plusieurs modes furtifs (142, 143, 144), étant apte à commander un premier dispositif de manière à suspendre une transmission d'au moins une donnée parmi les données candidates suspendues (80) sur un réseau de communication (15) ou un canal sans fil direct vers au moins un deuxième dispositif en communication avec le premier dispositif, et
le dispositif participant d'urgence (100), lorsque le VU (10) se trouve dans un état d'urgence, collectant les données (82) en utilisant un ou plusieurs dispositifs capteurs (160), déterminant un périmètre virtuel (81) sur la base des données (82) en utilisant l'unité de commande (115, 215), et transmettant le périmètre virtuel (81) à un ou plusieurs autres véhicules (30) en utilisant un dispositif de communication (130).

2. Système selon la revendication 1, le premier dispositif étant associé au VU (10) et comprenant l'unité de commande (115), et le deuxième dispositif étant situé à distance du VU (10).

3. Système selon la revendication 1, le premier dispositif étant associé au serveur distant (20) et comprenant l'unité de commande (115, 215), et
le deuxième dispositif étant situé à distance du serveur distant (20).

4. Système selon la revendication 1, ledit un ou lesdits plusieurs modes furtifs (142, 143, 144) comprenant un premier mode furtif (142) et un deuxième mode furtif (143), et les données candidates suspendues comprenant des premières données et des deuxièmes données, et
le signal de commande (350) étant apte à commander le premier dispositif de manière:
à suspendre la transmission des premières données et à transmettre les deuxièmes données lorsque le mode d'opération de données est le premier mode furtif (142), et
à suspendre la transmission des deuxièmes données et à transmettre les premières données lorsque le mode d'opération de données est le deuxième mode furtif (143).

5. Système selon la revendication 1, ledit un ou lesdits plusieurs modes furtifs (142, 143, 144) comprenant un premier mode furtif (142) présentant un premier niveau de sécurité et un deuxième mode furtif (143) présentant un deuxième niveau de sécurité supérieur au premier niveau de sécurité, et les données candidates suspendues comprenant des premières données et des deuxièmes données.

6. Système selon la revendication 5, le signal de commande (350) étant apte à commander le premier dispositif de manière :
à suspendre la transmission à la fois des premières données et des deuxièmes données lorsque le mode d'opération de données est le premier mode furtif (142), et
à suspendre la transmission des deuxièmes données et à transmettre les premières données lorsque le mode d'opération de données est le deuxième mode furtif (143).

7. Système selon la revendication 6, les premières données présentant un niveau de sécurité plus élevé que les deuxièmes données.

8. Système selon la revendication 5, le signal de commande (350) étant apte à commander le premier dispositif de manière à suspendre la transmission de toutes les données (80) parmi les données candidates suspendues lorsque le mode d'opération de données est l'un parmi ledit un ou lesdits plusieurs modes furtifs (142, 143, 144).

9. Système selon la revendication 1, le signal de commande (350) étant généré par un processeur (110, 210) de l'unité de commande (115, 215) du dispositif participant d'urgence (100) ou du serveur distant (20), le processeur (110, 210) étant couplé à une mémoire (120, 220) stockant des instructions de programme et étant réalisé, sur la base des instructions de programme, de manière :
à déterminer ledit un ou lesdits plusieurs paramètres d'entrée de programme associés au VU (10),
à déterminer le mode d'opération de données sur la base dudit un ou desdits plusieurs paramètres d'entrée de programme, et
à générer le signal de commande (350) appartenant au mode d'opération de données déterminé.

10. Système selon la revendication 1, ledit un ou lesdits plusieurs paramètres d'entrée de programme comprenant l'heure actuelle.

11. Système selon la revendication 1, les données candidates suspendues comprenant des données (82) liées au VU ou des données générées par un conducteur du VU (10).

12. Système selon la revendication 11, les données générées par le conducteur du VU (10) comprenant un message de conversation du conducteur avec une autre personne se trouvant à un endroit distant, et le message de conversation comprenant des informations concernant :
l'apparition d'un événement, et
des détails associés à l'événement.

13. Procédé de mise en œuvre d'un mode furtif d'un véhicule d'urgence (10), comprenant :
la réception de données (82) comprenant une entrée provenant d'un opérateur et/ou un ou plusieurs paramètres d'entrée de programme,
les données (82) comprenant une position du véhicule, une vitesse du véhicule et un identifiant du VU (10),
la détermination d'un mode d'opération de données sur la base dudit un ou desdits plusieurs paramètres d'entrée de programme reçus, comprenant la position du véhicule et la vitesse du véhicule, le mode d'opération de données étant un mode normal (141) ou un ou plusieurs modes furtifs (142, 143, 144),
la génération d'un signal de commande (350) par un dispositif participant d'urgence (100) ou un serveur distant (20) sur la base du mode d'opération déterminé,
le signal de commande (350), lorsque le mode d'opération de données est l'un parmi ledit un ou lesdits plusieurs modes furtifs (142, 143, 144), étant apte à commander un premier dispositif de manière à suspendre une transmission d'au moins un groupe de donnée (80) parmi les données candidates suspendues sur un réseau de communication (15) ou un canal sans fil direct vers au moins un deuxième dispositif en communication avec le premier dispositif, et
le dispositif participant d'urgence (100), lorsque le VU (10) se trouve dans un état d'urgence, collectant les données (82) en utilisant un ou plusieurs dispositifs capteurs (160), déterminant un périmètre virtuel (81) sur la base des données (82) en utilisant l'unité de commande (115, 215), et transmettant le périmètre virtuel (81) à un ou plusieurs autres véhicules (30) en utilisant un dispositif de communication (130).

14. Procédé selon la revendication 13, ledit un ou lesdits plusieurs modes furtifs (142, 143, 144) comprenant un premier mode furtif (142) présentant un premier niveau de sécurité et un deuxième mode furtif (143) présentant un deuxième niveau de sécurité supérieur au premier niveau de sécurité.

15. Procédé selon la revendication 14, le signal de commande (350) étant apte à commander le premier dispositif de manière :
à suspendre la transmission à la fois des premières données et des deuxièmes données lorsque le mode d'opération de données est le premier mode furtif (142), et
à suspendre la transmission des deuxièmes données et à transmettre les premières données lorsque le mode d'opération de données est le deuxième mode furtif (143).

16. Procédé selon la revendication 15, les premières données présentant un niveau de sécurité plus élevé que les deuxièmes données.

17. Procédé selon la revendication 13, comprenant en outre :
lorsque le premier dispositif fonctionne selon l'un parmi ledit un ou lesdits plusieurs modes furtifs (142, 143, 144),
la détermination que le mode d'opération est le mode normal (141), et
la génération du signal de commande apte à commander le premier dispositif de manière à sortir de l'un parmi ledit un ou lesdits plusieurs modes furtifs (142, 143, 144).

18. Procédé selon la revendication 13, comprenant en outre :
lorsque le premier dispositif fonctionne en mode normal (141),
la détermination que le mode d'opération est l'un parmi ledit un ou lesdits plusieurs modes furtifs (142, 143, 144),
l'identification de troisièmes données comme une partie de ladite au moins une donnée sur la base du mode d'opération déterminé, et
la génération du signal de commande (350) apte à commander le premier dispositif de manière à suspendre la transmission des troisièmes données.

19. Support de stockage lisible par ordinateur (4030) comportant des instructions de programme lisibles par ordinateur, les instructions de programme lisibles par ordinateur étant lues et exécutées par au moins un processeur (4010) pour la réalisation d'un procédé de mise en œuvre d'un mode furtif d'un véhicule d'urgence (10), comprenant :
la réception de données (82) comprenant une entrée provenant d'un opérateur et/ou un ou plusieurs paramètres d'entrée de programme,
les données (82) comprenant une position du véhicule, une vitesse du véhicule et un identifiant du VU (10),
la détermination d'un mode d'opération de données sur la base dudit un ou desdits plusieurs paramètres d'entrée de programme reçus, comprenant la position du véhicule et la vitesse du véhicule, le mode d'opération de données étant un mode normal (141) ou un ou plusieurs modes furtifs (142, 143, 144),
la génération d'un signal de commande (350) par un dispositif participant d'urgence (100) ou un serveur distant (20) sur la base du mode d'opération déterminé,
le signal de commande (350), lorsque le mode d'opération de données est l'un parmi ledit un ou lesdits plusieurs modes furtifs (142, 143, 144), étant apte à commander un premier dispositif de manière à suspendre une transmission d'au moins un groupe de donnée (80) parmi les données candidates suspendues sur un réseau de communication (15) ou un canal sans fil direct vers au moins un deuxième dispositif en communication avec le premier dispositif, et
le dispositif participant d'urgence (100), lorsque le VU (10) se trouve dans un état d'urgence, collectant les données (82) en utilisant un ou plusieurs dispositifs capteurs (160), déterminant un périmètre virtuel (81) sur la base des données (82) en utilisant l'unité de commande (115, 215), et transmettant le périmètre virtuel (81) à un ou plusieurs autres véhicules (30) en utilisant un dispositif de communication (130).

20. Support de stockage (4030) selon la revendication 19, ledit un ou lesdits plusieurs modes furtifs (142, 143, 144) comprenant un premier mode furtif (142) présentant un premier niveau de sécurité et un deuxième mode furtif (143) présentant un deuxième niveau de sécurité supérieur au premier niveau de sécurité.

21. Support de stockage (4030) selon la revendication 20, le signal de commande (350) étant apte à commander le premier dispositif de manière :
à suspendre la transmission à la fois des premières données et des deuxièmes données lorsque le mode d'opération de données est le premier mode furtif (142), et
à suspendre la transmission des deuxièmes données et à transmettre les premières données lorsque le mode d'opération de données est le deuxième mode furtif (143).

22. Support de stockage (4030) selon la revendication 21, les premières données présentant un niveau de sécurité plus élevé que les deuxièmes données.

23. Support de stockage (4030) selon la revendication 19, comprenant en outre :
lorsque le premier dispositif fonctionne selon l'un parmi ledit un ou lesdits plusieurs modes furtifs (142, 143, 144),
la détermination que le mode d'opération est le mode normal (141), et
la génération du signal de commande apte à commander le premier dispositif de manière à sortir de l'un parmi ledit un ou lesdits plusieurs modes furtifs (142, 143, 144).

24. Support de stockage (4030) selon la revendication 19, comprenant en outre :
lorsque le premier dispositif fonctionne en mode normal (141),
la détermination que le mode d'opération est l'un parmi ledit un ou lesdits plusieurs modes furtifs (142, 143, 144),
l'identification de troisièmes données comme une partie de ladite au moins une donnée sur la base du mode d'opération déterminé, et
la génération du signal de commande (350) apte à commander le premier dispositif de manière à suspendre la transmission des troisièmes données.
